# EUROPÄISCHE PATENTSCHRIFT

(11) **EP 1 331 415 B1**
(45) Veröffentlichungstag und Bekanntmachung des Hinweises auf die Patenterteilung: **04.08.2004**
(21) Anmeldenummer: 02001723.2
(22) Anmeldetag: 25.01.2002
(51) Int. Cl.: F16F 1/12, E05D 13/00

(54) **Federaufnahmekonus für ein Federende einer spiralförmigen Torsionsfeder**
Mounting cone for a spring end of a coil torsion spring
Cône de montage pour une extrémité d'un ressort de torsion hélicoidal

(43) Veröffentlichungstag der Anmeldung: 30.07.2003
(73) Patentinhaber: Wilhelm Brand KG, 59609 Anröchte (DE)
(72) Erfinder: Alers, Jürgen, 59558 Lippstadt (DE); Birwe, Jochen, 59609 Anröchte (DE)
(74) Vertreter: Patentanwälte Rehberg + Hüppe

(56) Entgegenhaltungen:
- DE-U- 9 200 454
- GB-A- 572 476
- US-A- 1 835 258
- US-A- 2 294 360
- US-A- 5 201 897
- US-A- 5 630 574
- US-A1- 2001 039 761
- US-B1- 6 174 575

## Beschreibung

Die Erfindung bezieht sich auf einen Federaufnahmekonus für ein Federende einer spiralförmigen Torsionsfeder, insbesondere einer Sektionaltorfeder für ein Industrietor oder ein Garagensektionaltor, mit einer Umfangsfläche zur Abstützung der Torsionsfeder an ihrem Innendurchmesser und mit Mitteln zum drehmomentfesten Festlegen des Federendes an dem Federaufnahmekonus, wobei die Mittel eine Flanke aufweisen, die von der Umfangsfläche aus zwischen Federwindungen der Torsionsfeder an dem Federende eingreift. Ein solcher Feder aufnahmekonus wird in US 2001/039761 A offenbart.

Bei Sektionaltoren dienen Torsionsfedern zum Ausgleichen der unterschiedlichen effektiven Gewichtskräfte der Sektionaltore. Dabei stützen die Torsionsfedern Wellen von Seiltrommeln torsionselastisch ab, auf denen Halteseile für die Sektionaltore abziehbar aufgewickelt sind.

Um eine torsionselastische Abstützung mit einer spiralförmigen Torsionsfeder zu realisieren, müssen die Enden einer Torsionsfelder einerseits ortsfest und andererseits drehfest an der abzustützenden Welle festgelegt werden. Hierfür werden ein sogenannter Festkonus einerseits und ein sogenannter Spannkonus andererseits eingesetzt. Der hier verwendete Oberbegriff für diese beiden Konen ist Federaufnahmekonus. Der Name "Konus" ist dabei auf die sich in der Regel konisch erweiternde Umfangsfläche zur Abstützung der Torsionsfeder an ihrem Innendurchmesser zurückzuführen. Die konische Form der Umfangsfläche ist auf den sich bei ihrer Torsionsbeanspruchung verjüngenden Innendurchmesser der spiralförmigen Torsionsfeder abgestimmt. Statt einer sich stetig erweiternden konischen Umfangsfläche kann auch eine sich stufenförmig erweiternde Umfangsfläche vorgesehen sein.

Ein bekannter Federaufnahmekonus weist zwei Sicherungselemente auf, bei denen es sich um mit Schrauben auf einen Grundkörper beaufschlagbare Klemmen für die erste Federwindung der Torsionsfeder an dem Federende handelt. Die beiden Klemmen sind durch unterschiedlichen Ausführungsformen an die jeweilige Drahtstärke und den jeweiligen Federdurchmesser anzupassen, und sie sind einander gegenüberliegend um 180° auf der Umfangsfläche versetzt angeordnet. Der bekannte Federaufnahmekonus weist koaxiale Befestigungslöcher auf, um ihn einmal als Festkonus und zum anderen in Verbindung mit einem Spannteil als Spannkonus zu verwenden. Nachteilig bei diesem bekannten Spannkonus ist, dass er das Federende nicht formschlüssig, sondern nur kraftschlüssig hält und der Aufwand zum Montieren des Federaufnahmekonusses an dem Federende relativ groß ist. Bei unterschiedlichen Baugrößen des Federaufnahmekonus für unterschiedliche Innendurchmesser der Torsionsfeder kann aufgrund desselben Abstands der Befestigungslöcher dasselbe Spannteil zur Anwendung kommen.

Bei einem bekannten Federaufnahmekonus der eingangs beschriebenen Art wird durch die von der Umfangsfläche abstehende Flanke ein Außengewinde auf der Umfangsfläche ausgebildet, das zwischen die Federwindungen der Torsionsfeder eingeschraubt wird. Zum drehmomentfesten Festlegen des Federendes an dem Aufnahmekonus wird das Federende erhitzt und dann in eine Aussparung in der Umfangsfläche hinein umgebogen. Der Montageaufwand für den Federaufnahmekonus ist entsprechend sehr groß. Darüber hinaus ist bei diesem bekannten Federaufnahmekonus eine Version als Spannkonus mit integriertem Spannteil und eine andere Version als Festkonus vorgesehen. Bei kleineren Serien verschlechtert dies die Ausnutzung von Werkzeugen zur Ausbildung des Befestigungskonus. Dabei ist auch zu berücksichtigen, dass durch das von der Flanke ausgebildete Außengewinde auf der Umfangsfläche des bekannten Federaufnahmekonus der Federaufnahmekonus nur für Torsionsfedern in einer bestimmten Steigungsrichtung geeignet ist bzw. für die gegenläufige Steigungsrichtung andere Versionen des Federaufnahmekonus erforderlich sind.

Der Erfindung liegt die Aufgabe zugrunde, einen Federaufnahmekonus der eingangs beschriebenen Art aufzuzeigen, der sowohl wirtschaftlich herstellbar als auch montierbar ist, wobei das drehmomentfeste Festlegen des Federendes an dem Federaufnahmekonus durch Formschluss erfolgen soll.

Erfindungsgemäß wird diese Aufgabe bei einem Federaufnahmekonus der eingangs beschriebenen Art dadurch gelöst, dass sich die Flanke über weniger als 180° des Umfangs der Umfangsfläche erstreckt und dass ein flankenfreier Bereich der Umfangsfläche von einem Sicherungselement überkragt wird, wobei das Sicherungselement eine Ausnehmung zur Aufnahme eines radial von der Torsionsfeder abstehenden Drehmomentübertragungsschenkels aufweist und wobei die Ausnehmung in zumindest einer tangentialen Richtung um die Umfangsfläche durch eine Anschlagfläche für den Drehmomentübertragungsschenkel begrenzt ist.

Der neue Federaufnahmekonus weist die Flanke an der Umfangsfläche nur über einen eng begrenzten Bereich auf. Die erste Federwindung kann von daher in entspanntem Zustand der Torsionsfeder über die Flanke hinweggedrückt werden, oder es ist zumindest leicht möglich, die Flanke zwischen die erste und die zweite Federwindung einzuschrauben. Die drehmomentfeste Festlegung des Federendes gegenüber dem neuen Federaufnahmekonus erfolgt durch einen radial von der Torsionsfeder abstehenden Drehmomentübertragungschenkel. Dieser kann mit relativ geringem Aufwand bei der Herstellung der Torsionsfeder durch Umbiegen des letzten Stücks des Federdrahts angebracht werden. Er muss in keinem Fall erst nach dem Aufbringen des Federendes auf den Federaufnahmekonus angeformt werden. Vielmehr wird er dort nur noch in die Ausnehmung gebracht, wo er bei der Drehmomentübertragung an der Anschlagfläche zur Anlage kommt. Die Drehmomentübertragung erfolgt also bei dem neuen Federaufnahmekonus durch Formschluss zwischen dem Drehmomentübertragungsschenkel und der Anschlagfläche.

Dabei ist es bevorzugt, wenn ein einstückiges Formteil sowohl die Umfangsfläche als auch die Anschlagfläche des neuen Federaufnahmekonus ausbildet, so dass sich zwischen der Umfangsfläche und der Anschlagfläche keine Verbindungen lösen können. Grundsätzlich ist aber auch eine mehrstückige Ausbildung des neuen Federaufnahmekonus aus dauerhaft oder lösbar miteinander verbundenen Teilstücken möglich.

Normalerweise steht eine Torsionsfeder für ein Sektionaltor immer unter gewisser Spannung, so dass der Drehmomentübertragungsschenkel immer gegen die Anschlagfläche gedrückt wird. So wird auch verhindert, dass der Drehmomentübertragungsschenkel aus der Ausnehmung in dem Sicherungselement heraustritt. Dennoch kann ein zusätzliches Arretierelement so an dem Sicherungselement anbringbar sein, dass es die Ausnehmung in der der Anschlagfläche gegenüberliegenden tangentialen Richtung verschließt. Der Drehmomentübertragungsschenkel wird so eindeutig in der Ausnehmung gehalten.

Das Arretierelement kann ein Sicherungsstift, beispielsweise ein Federstift, sein, der in eine Passbohrung in dem Sicherungselement eingreift. Diese Konstruktion ist ausreichend stabil und trotzdem kostengünstig sowohl in der Herstellung als auch in der Handhabung bei der Montage des neuen Federaufnahmekonus. Alternative Arretiermittel sind zum Beispiel Klammern oder Klemmen.

Das Sicherungselement kann zwei gegenläufige Ausnehmungen mit voneinander weg zeigenden Anschlagflächen aufweisen. Der Sinn ist dabei darin zu sehen, dass der Federaufnahmekonus unabhängig von der Steigungsrichtung der Torsionsfeder zum Einsatz kommen kann. Es wird dann immer die Ausnehmung zur Aufnahme des Drehmomentübertragungsschenkels verwendet, an deren Anschlagfläche sich der Drehmomentübertragungsschenkel durch die Federkraft der Torsionsfeder anlegt.

Bei der Flanke ist es bevorzugt, dass sie sich über weniger als 100° des Umfangs der Umfangsfläche erstreckt und dass sie zwischen die erste und die zweite Federwindung der Torsionsfeder an dem jeweiligen Federende eingreift. Dabei erweist es sich als sinnvoll, wenn die Erstreckung der Flanke bei kleineren Innendurchmessern der Torsionsfeder nicht nur absolut, sondern auch in Bezug auf den Gesamtumfang der Umfangsfläche kleiner ist als bei größeren Innendurchmessern.

Weiterhin ist es bevorzugt, wenn das Sicherungselement der Flanke bezüglich der Umfangsfläche diametral gegenüberliegt, d. h., dass das Sicherungselement um die Umfangsfläche um 180 ° versetzt zu der Flanke angeordnet ist. So wird die erste Federwindung an dem Federende in zwei einander gegenüberliegenden Bereichen zum einen durch das Sicherungselement und zum anderen durch die Flanke auf dem Federaufnahmekonus gehalten.

Weiterhin ist es bevorzugt, wenn die Umfangsfläche sich konisch erweiternd ausgebildet und aufgerauht ist. Die konische Umfangsfläche, an der die Torsionsfeder bei ihrer Torsionsbeanspruchung durch ihre Verjüngung des Innendurchmessers zur Anlage kommt, ist vorzugsweise aufgerauht, damit die Federwindungen bei der Torionsbeanspruchung der Torsionsfeder nicht von der Umfangsfläche abrutschen und ein gleichmäßiges Laufverhalten der Federwindungen im Übergangsbereich auf den Federaufnahmekonus gewährleistet ist. Alternativ kann die Umfangsfläche sich stufenförmig erweiternd ausgebildet sein.

An dem neuen Federaufnahmekonus kann mindestens ein Paar von koaxialen Befestigungslöchern vorgesehen sein. Der Federaufnahmekonus kann so als Festelement verwendet werden. Weiterhin kann er mit einem Spannteil verbunden werden, um auch als Spannkonus eingesetzt zu werden. Dabei kann das Spannteil für Federaufnahmekoni für verschiedene Innendurchmesser der Torsionsfeder dasselbe sein.

Bei großen Serien kann es auch sinnvoll sein, das Spannteil einstückig mit dem Rest des Federaufnahmekonus auszubilden, um einen Spannkonus herzustellen, der einen besonders geringen Montageaufwand aufweist. Dies bedeutet dann, dass ein einstückiges Formteil die Umfangsfläche und Angriffsflächen für Spannwerkzeuge ausbildet.

Insbesondere bei Torsionsfedern mit deutlich größeren Innendurchmessern als die durch sie verlaufenden Wellen kann ein weiterer Vorteil dadurch erzielt werden, dass eine Innenoberfläche an dem neuen Federkonus vorgesehen ist, um ein die Torsionsfeder an ihrem Innendurchmesser abstützendes Stützrohr seinerseits endseitig an dem Federaufnahmekonus abzustützen. Die Abstützung der Torsionsfeder an ihrem Innendurchmesser verhindert ihre Verwerfung bei Torsionsbeanspruchung. Die Lage des Stützrohrs zu der Welle in der Torsionsfeder wird durch zwei endseitige Federaufnahmekonen, d. h. einen Festkonus und einen Spannkonus, vollständig definiert, wobei die Länge des axial an beiden Federaufnahmekonen anschlagenden Stützrohrs den Montageabstand der Federaufnahmekonen vorgeben kann.

Die Erfindung wird im Folgenden anhand von zwei Ausführungsbeispielen näher erläutert und beschrieben, dabei zeigt:
- Fig. 1: eine radiale Ansicht einer ersten Ausführungsform des neuen Federaufnahmekonus mit Blickrichtung auf das Sicherungselement,
- Fig. 2: eine axiale Ansicht des Federaufnahmekonus gemäß Fig. 1,
- Fig. 3: eine weitere radiale Ansicht des Federaufnahmekonus gemäß den Fig. 1 und 2 mit bezüglich Fig. 1 um 90° versetzter Blickrichtung,
- Fig. 4: eine radiale, Fig. 1 entsprechende Ansicht einer zweiten Ausführungsform des Federaufnahmekonus,
- Fig. 5: eine axiale, Fig. 2 entsprechende Ansicht der Ausführungsform des Federaufnahmekonus gemäß Fig. 4, wobei ein Federende mit gestrichelten Linien angedeutet ist, und
- Fig. 6: eine radiale, Fig. 1 entsprechende Ansicht einer dritten Ausführungsform des Federaufnahmekonus.

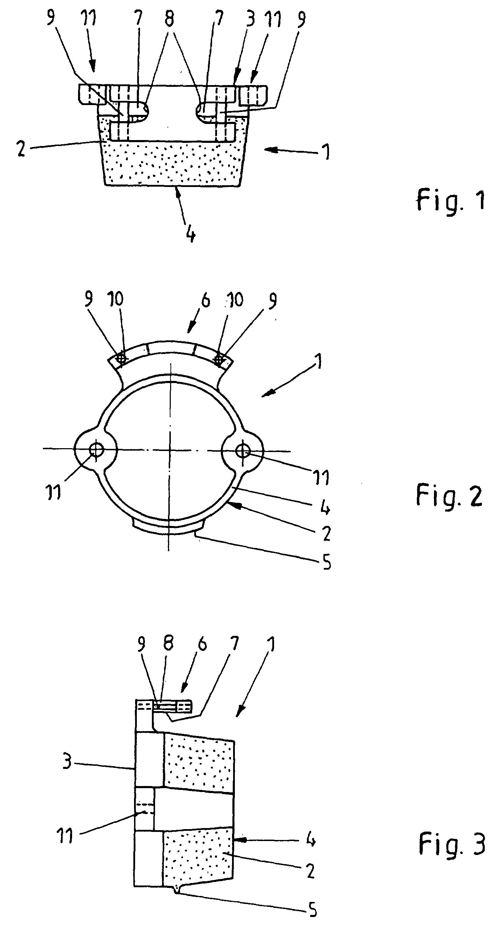

Der in den Fig. 1 bis 3 dargestellte Federaufnahmekonus 1 weist eine sich konisch erweiternde Umfangsfläche 2 auf. Dabei nimmt der Außenumfang der Umfangsfläche 2 zu einem freien Ende 3 des Federaufnahmekonus 1 zu, das einem Ende 4 gegenüberliegt, welches in ein Federende einer Torsionsfeder einzubringen ist. Die Torsionsfeder wird dabei so weit auf die Umfangsfläche 2 aufgeschoben, dass eine Flanke 5, die von der Umfangsfläche 2 absteht, zwischen die erste und die zweite Federwindung gelangt. Dies kann dadurch bewirkt werden, dass die erste Federwindung über die Flanke 5 hinweggedrückt wird, oder dass die Flanke 5 zwischen die erste und die zweite Federwindung eingeschraubt wird. Der Flanke 5 diametral gegenüberliegend ist ein Sicherungselement 6 vorgesehen, das die Umfangsfläche 2 in einem flankenfreien Bereich überkragt. In dem Sicherungselement 6 sind zwei Ausnehmungen 7 vorgesehen, um einen Drehmomentübertragungsschenkel aufzunehmen, zu dem das Ende des Federdrahts der Torsionsfeder radial nach außen umgebogen ist. Dabei wird die Ausnehmung 7 jeweils so ausgewählt, dass bei der Torsionsbeanspruchung der Torsionsfeder der hier nicht dargestellte Drehmomentübertragungsschenkel sich an eine jeweilige Anschlagfläche 8 anlegt. Um auch ein dynamisches Austreten des Drehmomentübertragungsschenkels aus der jeweiligen Ausnehmung 7 zu verhindern, kann ein Federstift 9 in eine Passbohrung 10 eingebracht werden, so dass er die Ausnehmung 7 in der der Anschlagfläche 8 gegenüberliegenden tangentialen Richtung verschließt. Die Oberfläche der Umfangsfläche 2 ist aufgerauht, um ein Abrutschen der Federwindung des Federendes zu verhindern. Befestigungslöcher 11 sind vorgesehen, um den Federaufnahmekonus entweder als Festkonus zu verwenden, oder mit einem Spannteil zu verbinden. Der gesamte Federaufnahmekonus gemäß den Fig. 1 bis 3 besteht aus einem einzigen Formteil, das in Spritzgusstechnik hergestellt sein kann.

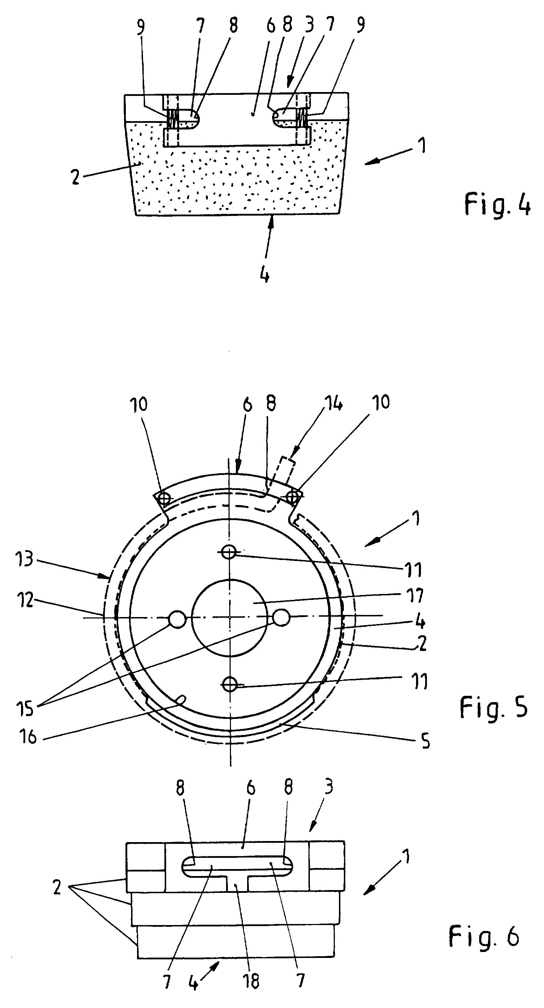

Dasselbe gilt für den Federaufnahmekonus gemäß den Fig. 4 und 5, der sich von dem Federaufnahmekonus gemäß den Fig. 1 und 3 dadurch unterscheidet, dass er für eine Torsionsfeder mit einem größeren Innendurchmesser vorgesehen ist. Diese Torsionsfeder 13 ist in Form einer Federwindung in Fig. 5 mit gestrichelter Linie angedeutet. Es handelt sich um die erste Federwindung 12 an dem Federende der Torsionsfeder 13, wobei der radial abgebogene Drehmomentübertragungsschenkel 14 zu erkennen ist. Auch bei dem Federaufnahmekonus gemäß den Fig. 4 und 5 sind die Befestigungslöcher 11 in demselben Abstand wie bei dem Federaufnahmekonus gemäß den Fig. 1 und 3 vorgesehen. Daneben gibt es weitere Befestigungslöcher 15 in einem anderen Abstand. Über die Befestigungslöcher 11 können aber dieselben Spannteile angebracht werden wie bei der Ausführungsform gemäß den Fig. 1 bis 3. Ein weiterer Unterschied im Detail besteht darin, dass sich die Flanke 5 gemäß den Fig. 4 und 5 über etwa 90° des Umfangs der Umfangsfläche 2 erstreckt, während die Erstreckung der Flanke 5 gemäß den Fig. 1 bis 3 nur etwa 50° entspricht. Dies steht im Einklang mit einer höheren Formsteifigkeit und gleichzeitig geringeren axialen Abzugskräften von dem Federaufnahmekonus bei Torsionsfedern mit gleicher Drahtstärke aber kleinerem Innendurchmesser. Bei Torsionsfedern mit größerem Innendurchmesser ist es sinnvoll, die jeweilige Torsionsfeder auch in dem Bereich zwischen den an ihr endseitig angebrachten Federaufnahmekonen 1 an ihrem Innendurchmesser abzustützen. Hierzu kann ein hier nicht dargestelltes Stützrohr verwendet werden, das sich mit seinem Außendurchmesser an einer Innenoberfläche 16 des Federaufnahmekonus 1 gemäß Fig. 5 abstützt und dessen Länge den Montageabstand für einen Festkonus und einen Spannkonus für die jeweilige Torsionsfeder vorgeben kann. Das Stützrohr verhindert konkret, dass sich die Torsionsfeder 13 um eine Welle herum verwirft, die durch einen zentrale Ausnehmung 17 durch die Federaufnahmekonen hindurch verläuft und deren Außendurchmesser bei Torsionsfedern mit großem Innendurchmesser viel kleiner als dieser Innendurchmseser ist.

Die Ausführungsform des Federaufnahmekonus 1 gemäß Fig. 6 unterscheidet sich in zwei wesentlichen Punkten von den in den bisherigen Fig. 1 bis 5 gezeigten Ausführungsformen. Zum einen ist die Umfangsfläche 2 nicht so ausgebildet, dass sie sich stetig erweitert. Mit anderen Worten ist die Umfangsfläche 2 hier nicht konisch sondern stufenförmig. Dabei kann auf ein Aufrauhen der Umfangsfläche 2 weitgehend verzichtet werden, da durch die Abstützung einer sich unter Torsionsbeanspruchung bezüglich ihres Innendurchmessers verjüngenden Torsionsfeder auf der abgestuften Umfangsfläche 2 zumindest geringere axiale Abzugskräfte von dem Federaufnahmekonus 1 generiert werden. Ein weiterer Unterschied der Ausführungsform des Federaufnahmekonus 1 gemäß Fig. 6 von den bisher beschriebenen Ausführungsformen ist darin zu sehen, dass sich hier die Ausnehmungen 7 und die Anschlagflächen 8 für Torsionsfedern mit unterschiedlicher Steigungsrichtung gegenüberliegen und nicht voneinander abgewandt sind. Um in diese Ausnehmungen 7 zu gelangen, wird der Drehmomentübertragungsschenkel der jeweiligen Torsionsfeder durch eine Durchtrittsöffnung 18 hindurchgeführt. Ein Arretiermittel für den Drehmomentübertragungsschenkel in der jeweiligen Ausnehmung 7 kann bei der Ausführungsform des Federaufnahmekonus 1 gemäß Fig. 6 zwar ebenfalls vorgesehen sein, es ist aber weniger notwendig als bei den Ausführungsformen gemäß den vorangehenden Fig. 1 bis 5.

Unabhängig von seiner Größe, beispielsweise ausgelegt für übliche Innendurchmesser von Torsionsfedern für Sektionaltore von 50, 65, 95, 142 oder 152 mm, ist der neue Federaufnahmekonus einfach in seiner Herstellung und seiner Montage bei absolut sicherer drehmomentfester Festlegung des Federendes.

### BEZUGSZEICHENLISTE

- 1 -: Federaufnahmekonus
- 2 -: Umfangsfläche
- 3 -: Ende
- 4 -: Ende
- 5 -: Flanke
- 6 -: Sicherungselement
- 7 -: Ausnehmung
- 8 -: Anschlagfläche
- 9 -: Federstift
- 10 -: Passbohrung

- 11 -: Befestigungsloch
- 12 -: Federwindung
- 13 -: Torsionsfeder
- 14 -: Drehmomentübertragungsschenkel
- 15 -: Befestigungsloch
- 16 -: Innenoberfläche
- 17 -: Ausnehmung
- 18 -: Durchtrittsöffnung

## Patentansprüche

1. Federaufnahmekonus (1) für ein Federende einer spiralförmigen Torsionsfeder (13), insbesondere einer Sektionaltorfeder für ein Industrietor oder ein Garagensektionaltor, mit einer Umfangsfläche (2) zur Abstützung der Torsionsfeder an ihrem Innendurchmesser und mit Mitteln zum drehmomentfesten Festlegen des Federendes an dem Federaufnahmekonus, wobei die Mittel eine Flanke (5) umfassen, die von der Umfangsfläche aus zwischen Federwindungen der Torsionsfeder an dem Federende eingreift, wobei sich die Flanke (5) über weniger als 180° des Umfangs der Umfangsfläche (2) erstreckt, **dadurch gekennzeichne**, dass ein flankenfreier Bereich der Umfangsfläche (2) von einem Sicherungselement (6) überkragt wird, wobei das Sicherungselement (6) eine Ausnehmung (7) zur Aufnahme eines radial von der Torsionsfeder (13) abstehenden Drehmomentübertragungsschenkels (14) aufweist und wobei die Ausnehmung (7) in zumindest einer tangentialen Richtung um die Umfangsfläche (2) durch eine Anschlagfläche (8) für den Drehmomentübertragungsschenkel (14) begrenzt ist.

2. Federaufnahmekonus nach Anspruch 1, **dadurch gekennzeichnet, dass** ein einstückiges Formteil die Umfangsfläche (2) und die Anschlagfläche (8) ausbildet.

3. Federaufnahmekonus nach Anspruch 1 oder 2, **dadurch gekennzeichnet, dass** ein Arretierelement so an dem Sicherungselement (6) anbringbar ist, dass es die Ausnehmung (7) in der der Anschlagfläche (8) gegenüberliegenden tangentialen Richtung verschließt.

4. Federaufnahmekonus nach Anspruch 3, **dadurch gekennzeichnet, dass** das Arretierelement ein Sicherungsstift ist, der in eine Passbohrung (10) in dem Sicherungselement (6) eingreift.

5. Federaufnahmekonus nach einem der Ansprüche 1 bis 4, **dadurch gekennzeichnet, dass** das Sicherungselement (6) zwei gegenläufige Ausnehmungen (7) mit voneinander weg zeigenden Anschlagflächen (8) aufweist.

6. Federaufnahmekonus nach einem der Ansprüche 1 bis 5, **dadurch gekennzeichnet, dass** der sich die Flanke (5) über weniger als 100° des Umfangs der Umfangsfläche (2) erstreckt und zwischen die erste und die zweite Federwindung der Torsionsfeder (13) an dem Federende eingreift.

7. Federaufnahmekonus nach einem der Ansprüche 1 bis 6, **dadurch gekennzeichnet, dass** das Sicherungselement (7) der Flanke (5) bezüglich der Umfangsfläche (2) diametral gegenüberliegt.

8. Federaufnahmekonus nach einem der Ansprüche 1 bis 7, **dadurch gekennzeichnet, dass** die Umfangsfläche (2) sich konisch erweiternd ausgebildet und aufgerauht ist.

9. Federaufnahmekonus nach einem der Ansprüche 1 bis 8, **dadurch gekennzeichnet, dass** mindestens eine Paar von coaxialen Befestigungslöchern (11) vorgesehen ist.

10. Federaufnahmekonus nach einem der Ansprüche 1 bis 9, **dadurch gekennzeichnet, dass** eine Innenoberfläche (16) vorgesehen ist, um ein die Torsionsfeder (13) an ihrem Innendurchmesser abstützendes Stützrohr seinerseits endseitig an dem Federaufnahmekonus (1) abzustützen.

## Claims

1. A spring holding cone (1) for a spring end of a spiral torsion spring (13), particularly of a sectional door spring for an industrial door or a garage sectional door, the spring holding cone having an outside surface (2) for supporting the torsion spring at its inside diameter, and means for fixing the spring end to the spring holding cone in a torque resistant way, the fixing means comprising a flank (5) which protrudes from the circumferential between spring turns of the torsion spring at the spring end, the flank (5) extending over less than 180° of the circumference of the outside surface (2), **characterized in that** a securing element (6) extends above a flank-free area of the outside surface (2), the securing element (6) having an recess (7) for holding a torque transfer leg (14) radially extending from the torsion spring (13), and the recess (7) being limited in at least one circumferential direction around the outside surface (2) by a stopping face (8) for the torque transfer leg (14).

2. The spring holding cone of Claim 1, **characterized in that** the outside surface (2) and the stopping face (8) are formed by a one-piece formed part.

3. The spring holding cone of Claim 1 or 2, **characterized in that** a locking element can be attached to the securing element (6) in such a way that it closes the recess (7) in the circumferential direction opposite to the stopping face (8).

4. The spring holding cone of Claim 3, **characterized in that** the locking element is a locking pin which is fitted into a bore (10) within the securing element (6).

5. The spring holding cone of any of the Claims 1 to 4, **characterized in that** the securing element (6) has a two opposing recesses (7) with stopping faces (8) facing away from one another.

6. The spring holding cone of any of the Claims 1 to 5, **characterized in that** the flank (5) extends over less than 100° of the circumference of the outside surface and protrudes between the first and the second spring turn of the torsion spring (13) at the spring end.

7. The spring holding cone of any of the Claims 1 to 6, **characterized in that** the securing element (7) is located diametrically opposite to the flank (5) with regard to the circumference of the outside surface (2).

8. The spring holding cone of any of the Claims 1 to 7, **characterized in that** the outside surface (2) has a conically increasing diameter and is roughened.

9. The spring holding cone of any of the Claims 1 to 8, **characterized in that** at least one pair of coaxial fastening holes (11) is provided.

10. The spring holding cone of any of the Claims 1 to 9, **characterized in that** an inside surface (16) is provided for supporting a supporting tube at the spring holding cone (1), which supporting tube supports the torsion spring (13) at its inside diameter.

## Revendications

1. Cône de réception de ressort (1) pour une extrémité d'un ressort de torsion (13) de forme hélicoïdale, en particulier d'un ressort de porte à sections pour une porte industrielle ou une porte de garage à sections, présentant une surface périphérique (2) pour soutenir le ressort de torsion sur son diamètre intérieur ainsi que des moyens pour la fixation résistant au couple de torsion de l'extrémité du ressort sur le cône de réception de ressort, dans lequel les moyens comprennent un flanc (5) qui s'engage depuis la surface périphérique entre des spires du ressort de torsion, à l'extrémité du ressort, dans lequel le flanc (5) s'étend sur moins de 180° de la circonférence de la surface périphérique (2), **caractérisé en ce qu'**une zone sans flanc de la surface périphérique (2) est surplombée par un élément de blocage (6), l'élément de blocage (6) présentant un évidement (7) destiné à recevoir une branche (14) transmettant le couple de rotation et dépassant radialement du ressort de torsion (13), et l'évidement (7) étant limité, dans au moins une direction tangentielle à la surface périphérique (2), par une surface de butée (8) pour la branche (14) de transmission du couple de rotation.

2. Cône de réception de ressort selon la revendication 1, **caractérisé en ce qu'**une pièce façonnée d'un seul tenant réalise la surface périphérique (2) et la surface de butée (8).

3. Cône de réception de ressort selon la revendication 1 ou 2, **caractérisé en ce que** l'on peut monter sur l'élément de blocage (6) un élément d'arrêt de manière qu'il ferme l'évidement (7) dans la direction tangentielle opposée à la surface de butée (8).

4. Cône de réception de ressort selon la revendication 3, **caractérisé en ce que** l'élément d'arrêt est un doigt de blocage qui s'engage dans un trou d'ajustement (10) pratiqué dans l'élément de blocage (6).

5. Cône de réception de ressort selon l'une des revendications 1 à 4, **caractérisé en ce que** l'élément de blocage (6) présente deux évidements (7) en sens contraire avec des surfaces de butée (8) dirigées à l'opposé l'une de l'autre.

6. Cône de réception de ressort selon l'une des revendications 1 à 5, **caractérisé en ce que** le flanc (5) s'étend sur moins de 100° de la circonférence de la surface périphérique (2) et s'engage entre la première et la deuxième spire du ressort de torsion (13), à l'extrémité du ressort.

7. Cône de réception de ressort selon l'une des revendications 1 à 6, **caractérisé en ce que** l'élément de blocage (7) est diamétralement opposé au flanc (5), par rapport à la surface périphérique (2).

8. Cône de réception de ressort selon l'une des revendications 1 à 7, **caractérisé en ce que** la surface périphérique (2) est réalisée de manière à s'élargir coniquement et est rendue rugueuse.

9. Cône de réception de ressort selon l'une des revendications 1 à 8, **caractérisé en ce qu'**il est prévu au moins une paire de trous de fixation (11) coaxiaux.

10. Cône de réception de ressort selon l'une des revendications 1 à 9, **caractérisé en ce qu'**il est prévu une surface intérieure (16) pour soutenir à une extrémité, sur le cône de réception de ressort (1), un tube d'appui qui de son côté soutient le ressort de torsion (13) sur son diamètre intérieur.
